# EUROPEAN PATENT APPLICATION

(11) **EP 4 726 521 A1**
(43) Date of publication of application: **15.04.2026**
(21) Application number: 24819375.7
(22) Date of filing: 06.06.2024
(51) Int. Cl.: G06F 3/04886, A63F 13/24, G06F 3/041, G06F 3/0354, G06F 3/0481

(54) **TERMINAL DEVICE AND GAME IMAGE DISPLAY METHOD**

(30) Priority: 09.06.2023 JP 2023095340
(71) Applicant: Sony Interactive Entertainment Inc., Tokyo 108-0075 (JP)
(72) Inventor: OGASAWARA, Aoi, Tokyo 108-0075 (JP); NOMURA, Masanori, Tokyo 108-0075 (JP); KONDO, Yurika, Tokyo 108-0075 (JP); YANG, Xinyi, Tokyo 108-0075 (JP); TOMITA, Kyohei, Tokyo 108-0075 (JP)
(74) Representative: Fish & Richardson P.C.
(86) International application number: PCT/JP2024/020635
(87) International publication number: WO 2024/253147

(57) **Abstract**

A terminal device 100 includes a touch panel 160 that has a rectangular display region, a first input section 163 that is disposed outside a left side of the touch panel 160 and has at least one operation element, a second input section 164 that is disposed outside a right side of the touch panel 160 and has at least one operation element, and a controller. The controller sets a first operation region in a left part of the display region, sets a second operation region in a right part of the display region, receives input data regarding a user operation performed on the first operation region and/or the second operation region, transmits the input data to a game device, receives game image data from the game device, and displays the game image on the touch panel 160.

## Description

### [Technical Field]

The present disclosure relates to a technique for allowing a user to play a game from a remote location away from a game device.

### [Background Art]

PTL 1 discloses a technique for allowing a user who is in a parents' house, to access a game device in the user's house and to play a game installed in the game device in the user's house. A game device in the parents' house transmits data inputted by the user to the game device in the user's house, and then, the game device in the user's house reflects the input data in progress of the game, generates image data and sound data, and stream-transmits the generated image data and sound data to the game device in the parents' house. This play mode is called "remote play" in which a user can play a game from a remote location away from a game device.

### [Citation List]

### [Patent Literature]

[PTL 1]
Japanese Patent Laid-Open No. 2022-30870

### [Summary]

### [Technical Problem]

By using a mechanism for remote play, a user can remotely operate a game device that is present in a remote location to play a game. An object of the present disclosure is to provide a terminal device that is suitable for remote play.

### [Solution to Problem]

A certain aspect of the present disclosure is a terminal device that is operated by a user. The terminal device includes a display device that has a rectangular display region, a first input section that is disposed outside a left side of the display device and has at least one operation element, a second input section that is disposed outside a right side of the display device and has at least one operation element, and at least one processor that has hardware. The at least one processor sets a first operation region in a left part of the display region and sets a second operation region in a right part of the display region, receives input data regarding a user operation performed on the first operation region and/or the second operation region, receives input data regarding a user operation performed on the operation elements, transmits the input data to a game device executing a game, receives game image data generated based on the input data by the game device, and
displays the game image on the display device.

Another aspect of the present disclosure relates to a game image display method in a terminal device including a display device that has a rectangular display region, and operation elements that are disposed outside left and right sides of the display device, the terminal device being connected with a game device in a communicable manner. This game image display method includes a step of setting a first operation region in a left part of the display region and setting a second operation region in a right part of the display region, a step of receiving input data regarding a user operation performed on the first operation region and/or the second operation region, a step of receiving input data regarding a user operation performed on the operation elements, a step of transmitting the input data to the game device, a step of receiving game image data generated based on the input data by the game device, and a step of displaying the game image on the display device.

It is to be noted that a method, a device, a system, a recording medium, or a computer program, which are obtained by translating any combination of the above constituent elements or expressions in the present disclosure, is also effective as an aspect of the present disclosure.

### [Brief Description of Drawings]

[FIG. 1]

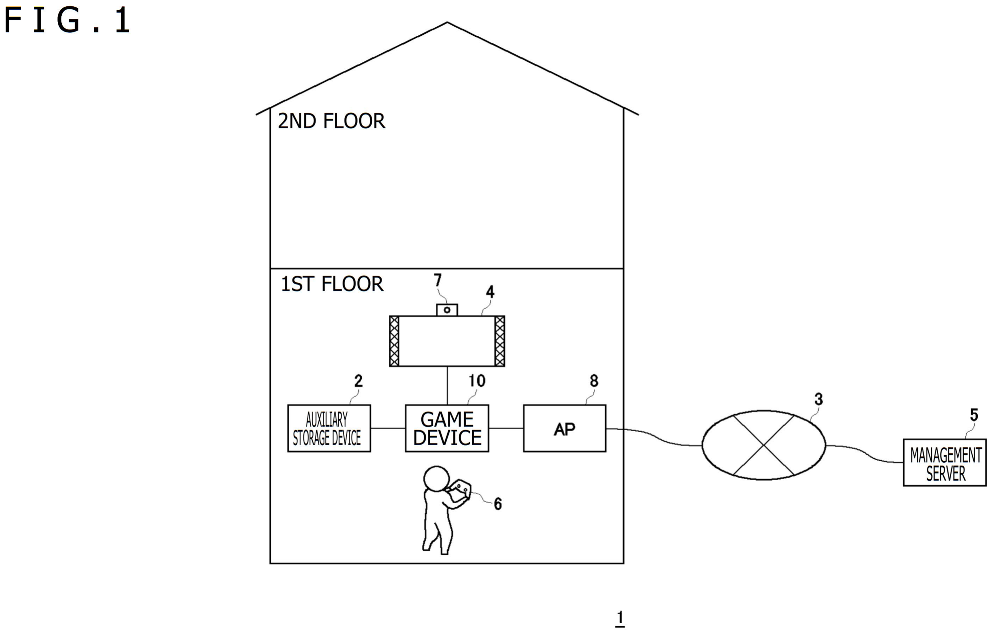

   FIG. 1 is a diagram depicting one aspect of an information processing system.
[FIG. 2]

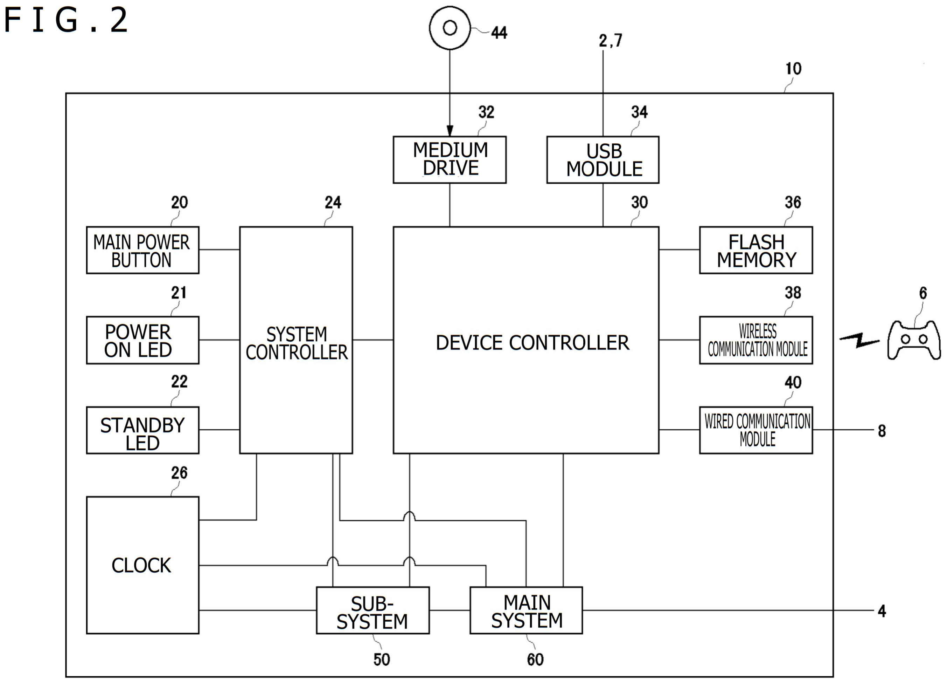

   FIG. 2 is a diagram depicting a hardware configuration of a game device.
[FIG. 3]

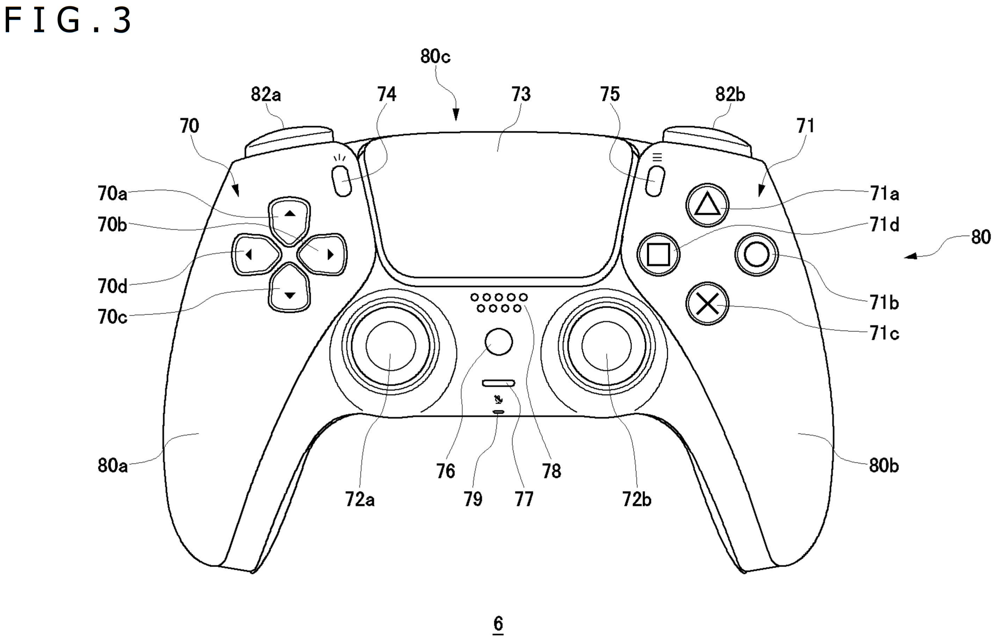

   FIG. 3 is a top view of a game controller.
[FIG. 4]

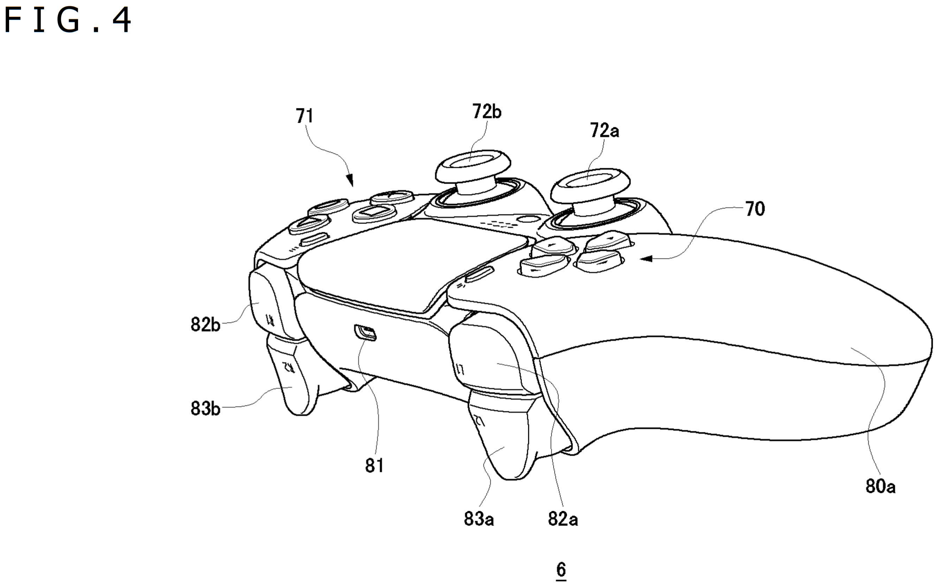

   FIG. 4 is a perspective view of the game controller.
[FIG. 5]

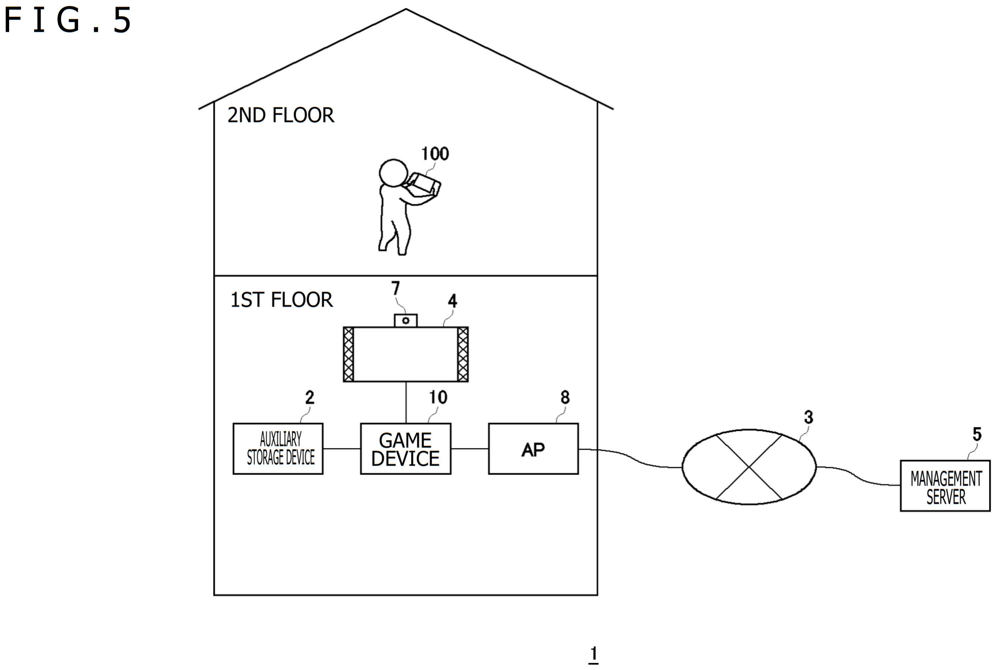

   FIG. 5 is a diagram depicting another aspect of the information processing system.
[FIG. 6]

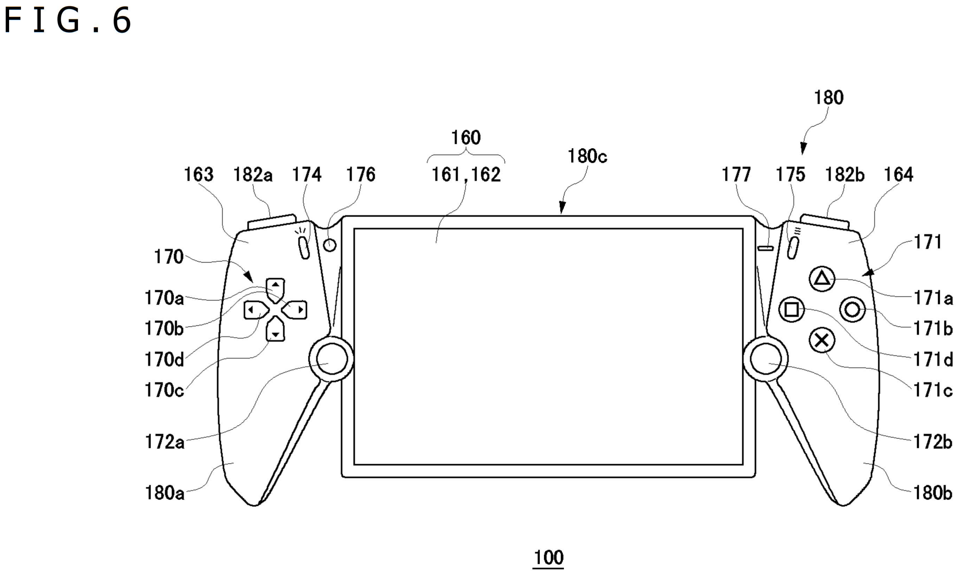

   FIG. 6 is a top view of a terminal device.
[FIG. 7]

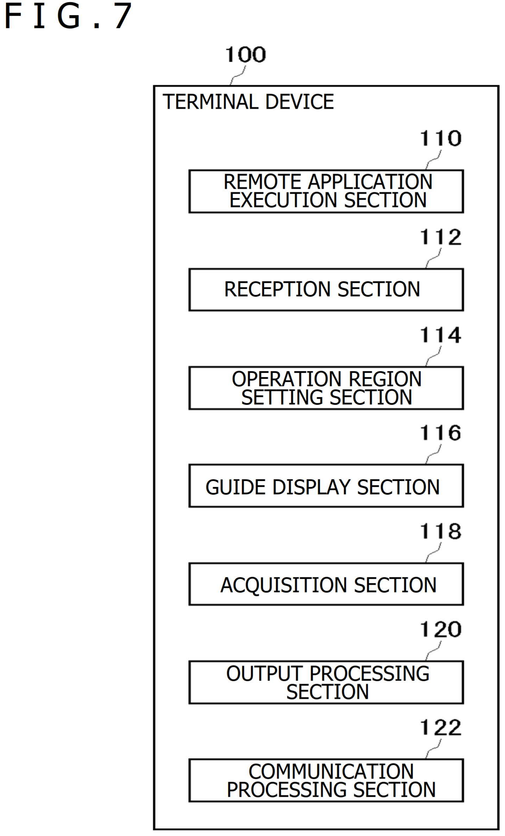

   FIG. 7 is a diagram depicting functional blocks of a controller of the terminal device.
[FIG. 8]

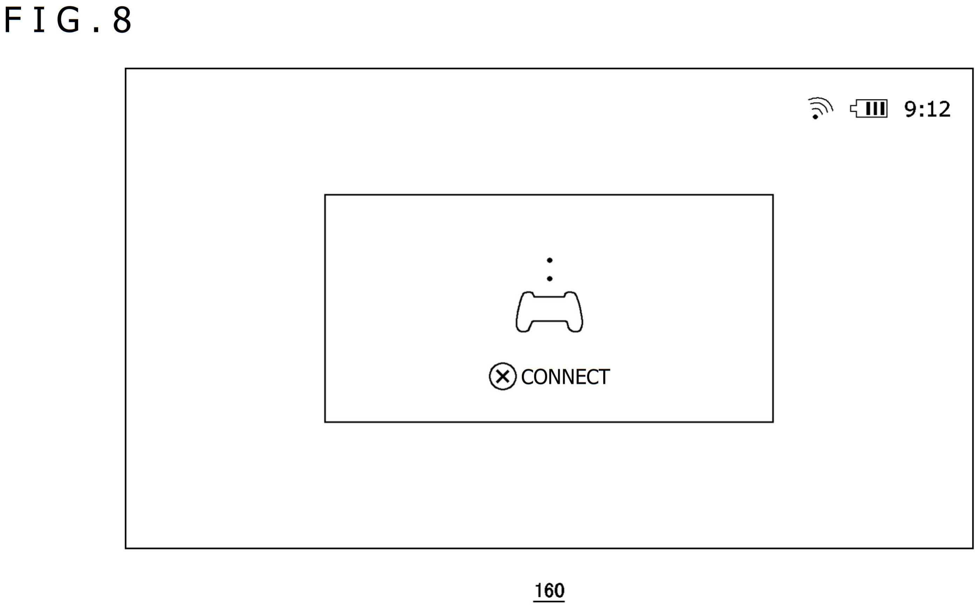

   FIG. 8 is a diagram depicting an example of a home screen.
[FIG. 9]

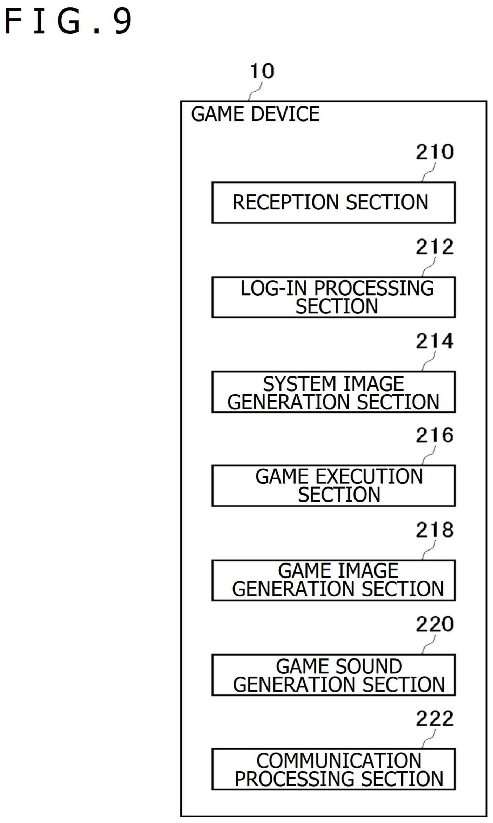

   FIG. 9 is a block diagram depicting functional blocks of the game device.
[FIG. 10]

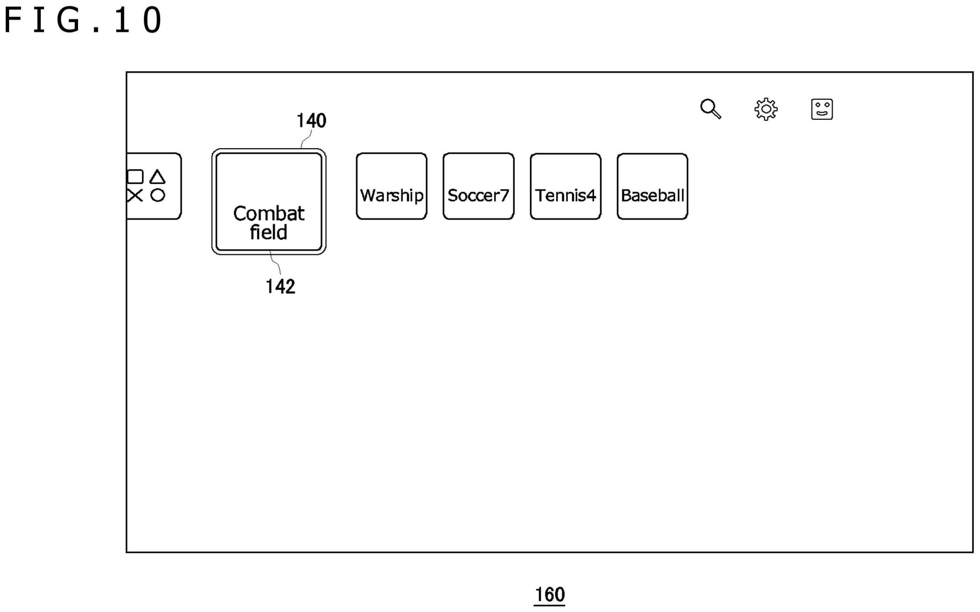

   FIG. 10 is a diagram depicting an example of a home screen provided by the game device.
[FIG. 11]

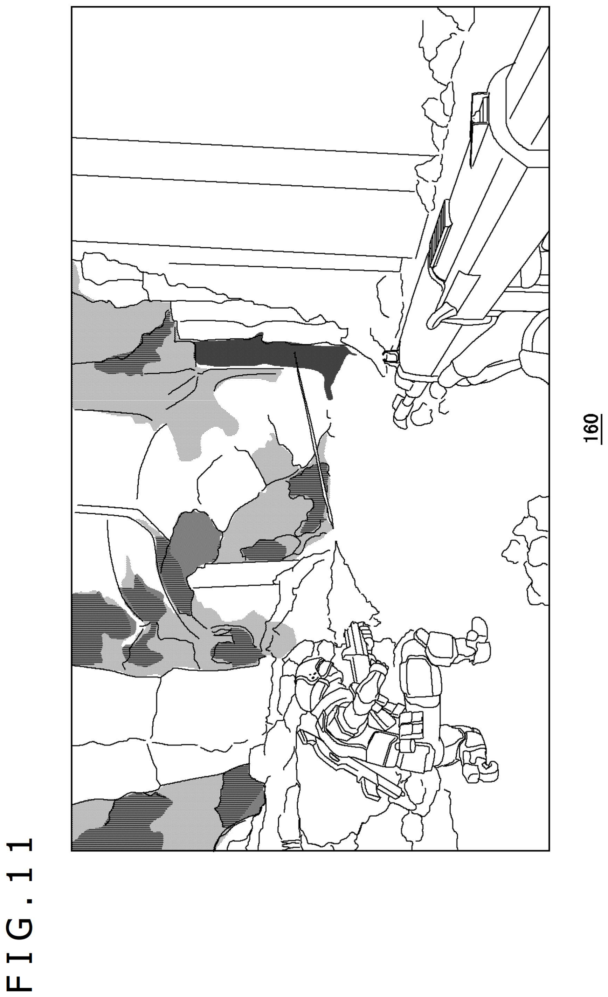

   FIG. 11 is a diagram depicting an example of a game image during a remote play.
[FIG. 12]

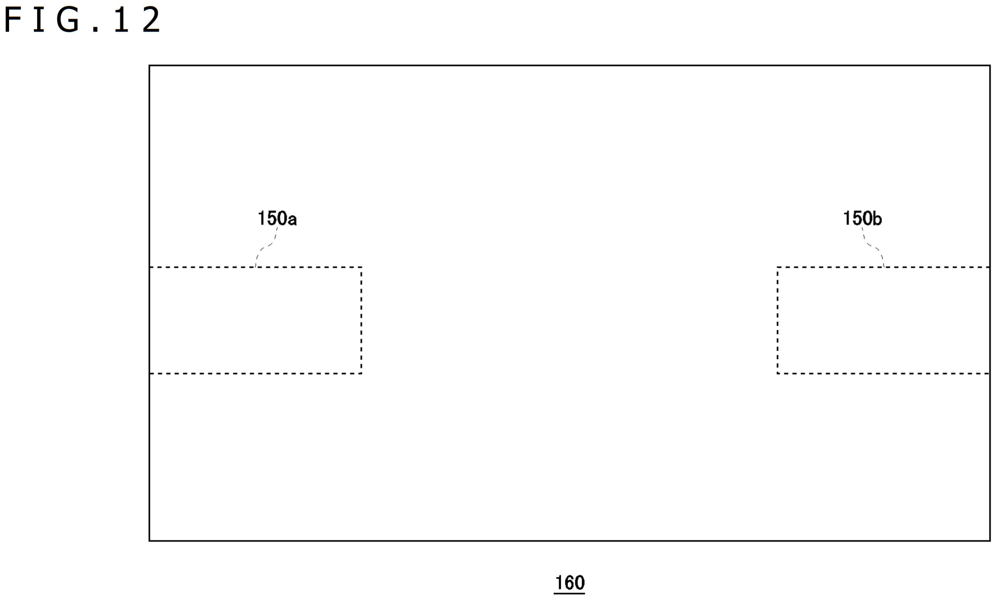

   FIG. 12 is a diagram depicting two operation regions that are set in a display region.
[FIG. 13]

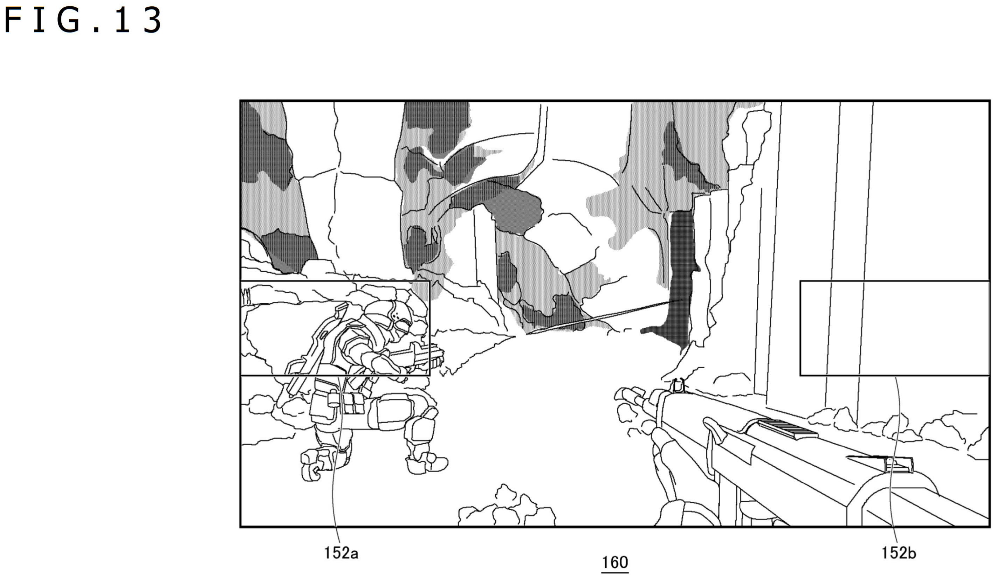

   FIG. 13 is a diagram depicting an example of a displayed guide.
[FIG. 14]

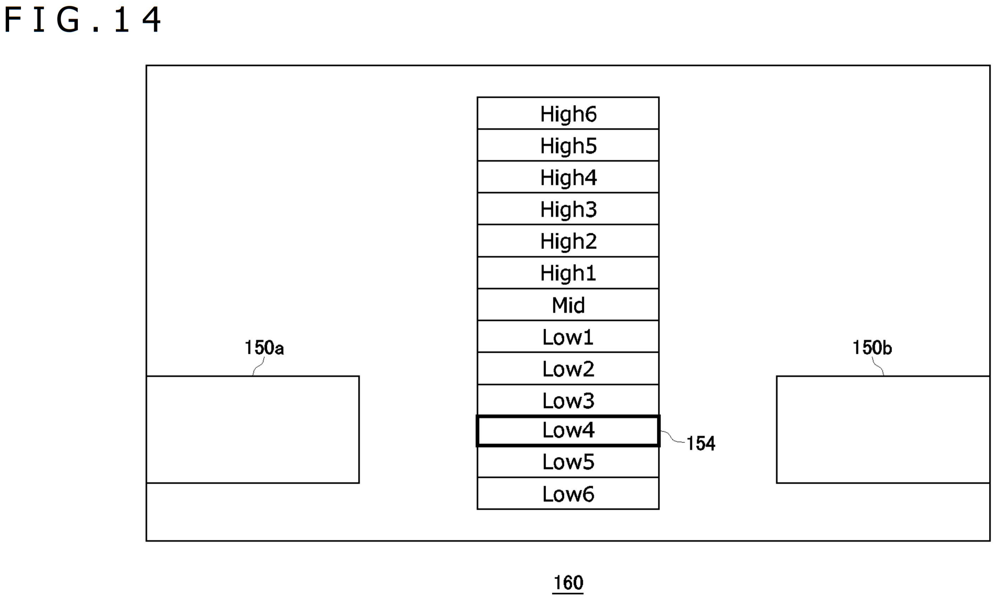

   FIG. 14 is a diagram depicting an example of a setting screen for adjusting a vertical direction position.
[FIG. 15]

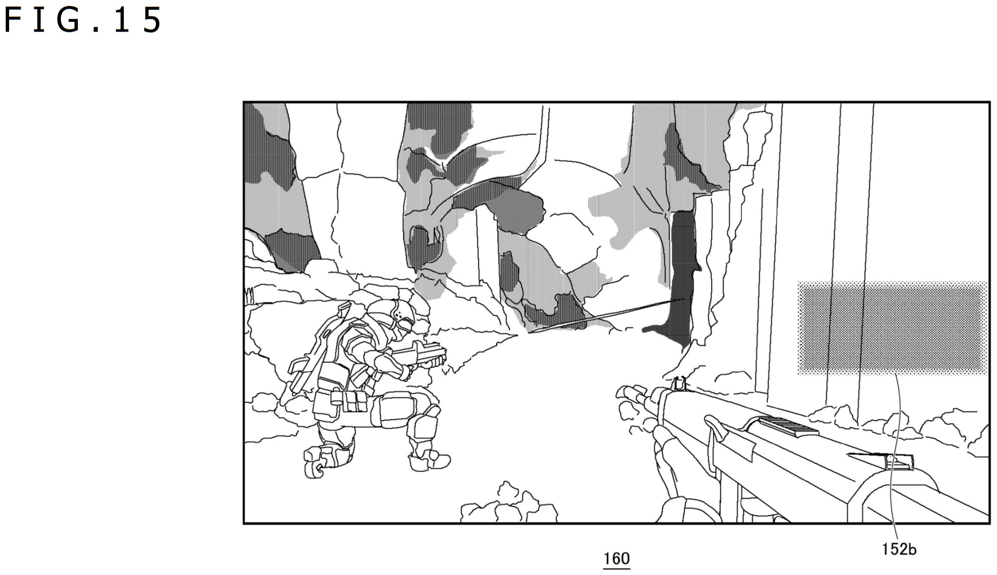

   FIG. 15 is a diagram depicting another example of a displayed guide.
[FIG. 16]

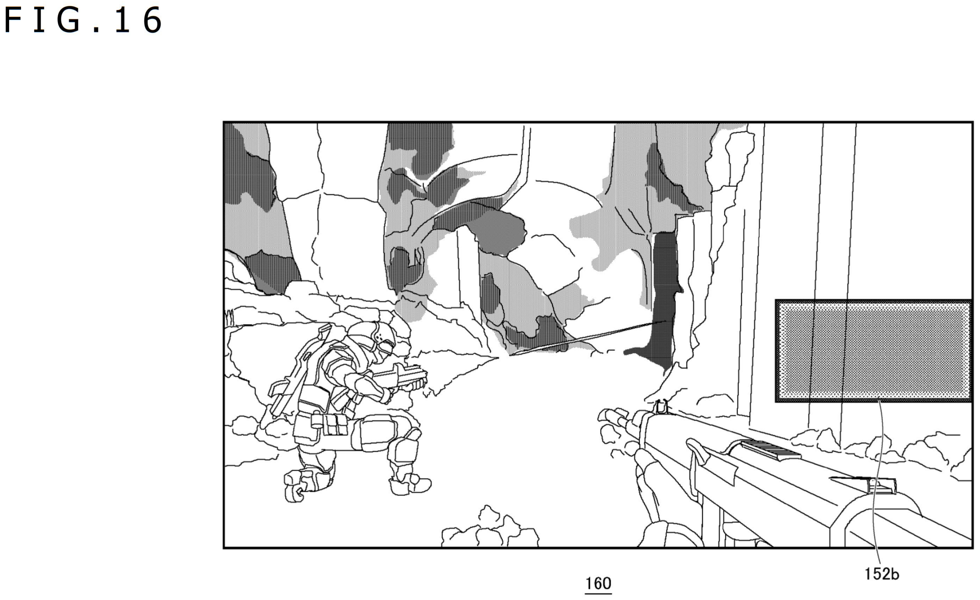

   FIG. 16 is a diagram depicting still another example of a displayed guide.
[FIG. 17]

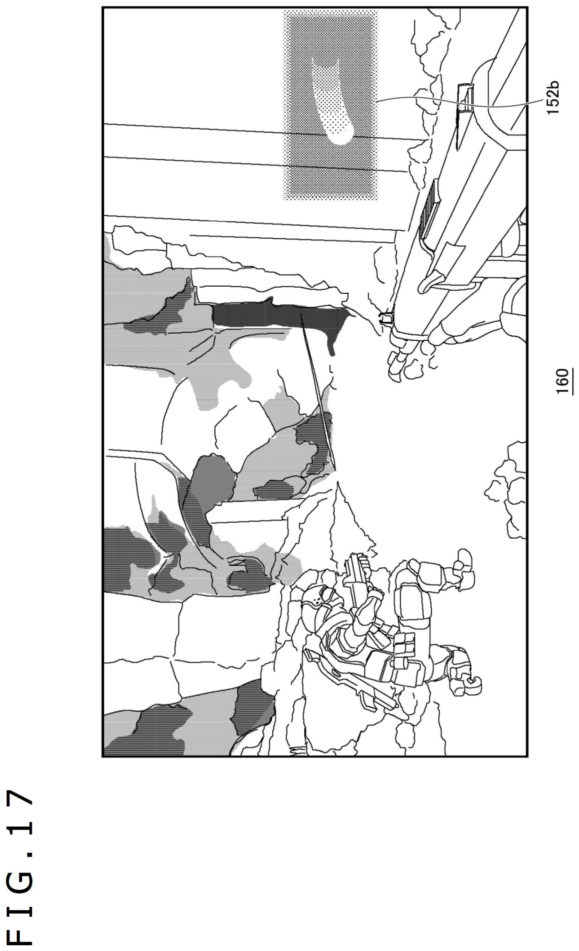

   FIG. 17 is a diagram depicting yet another example of a displayed guide.

### [Description of Embodiment]

FIG. 1 depicts one aspect of an information processing system 1 according to an embodiment. The information processing system 1 includes a game device 10 that is operated by a user, and a management server 5. The game device 10 and the management server 5 are connected over a network 3 such as the internet or a LAN (Local Area Network). An access point (hereinafter, referred to as a "AP") 8 has a wireless access point function and a router function. The game device 10 establishes wireless or wired connection to the AP 8 to become able to communicate with the management server 5 on the network 3.

A game controller 6 is an input device of the game device 10. The game device 10 establishes wireless or wired connection to the game controller 6, and then, the game controller 6 transmits input data regarding an operation performed by a user, to the game device 10. When receiving the input data from the game controller 6, the game device 10 reflects the input data in processing of system software and application software and outputs a processing result through an output device 4.

An auxiliary storage device 2 is a large capacity storage device such as an HDD (hard disk drive) or an SSD (solid state drive), and may be an internal storage device. Alternatively, the auxiliary storage device 2 may be an external storage device to be connected to the game device 10 via a USB (Universal Serial Bus) or the like. The output device 4 may be a television which has a display device for outputting images and a speaker for outputting sounds. The output device 4 may be connected to the game device 10 by a wire cable or wirelessly. The game device 10 is a stationary game console, and is disposed along with the output device 4 on the first floor of a user's house.

A camera 7 which is an imaging device, is disposed around the output device 4 and images a space surrounding the output device 4. FIG. 1 depicts an example in which the camera 7 is mounted on an upper side of the output device 4. Alternatively, the camera 7 may be disposed on a lateral or lower side of the output device 4. The camera 7 may be a stereo camera.

The management server 5 is maintained and managed by an operation body of the information processing system 1, and provides a game-related network service to a user. The user has a user account for uniquely identifying the user, and uses the user account to sign in the network service. Hereinafter, signing in the network service may also be referred to as signing in the management server 5.

The user account may consist of an email address and a password. The user logs in to the game device 10 which holds the user's user account, and then, the user account is authenticated by the management server 5, so that signing in the management server 5 is achieved. Logging in to the game device 10 means allowing the user to use a function of the game device 10. Signing in the management server 5 by the user means allowing the user to use the network service.

By signing in the management server 5, the user can save game save data in the management server 5, and register, in the management server 5, an award item (trophy) acquired in a game play. By signing in the management server 5, the user can perform a "remote play" which is to log in to the game device 10 to play a game from a remote location.

FIG. 2 depicts a hardware configuration of the game device 10. The game device 10 includes a main power button 20, a power ON LED (Light Emitting Diode) 21, a standby LED 22, a system controller 24, a clock 26, a device controller 30, a medium drive 32, a USB module 34, a flash memory 36, a wireless communication module 38, a wired communication module 40, a sub-system 50, and a main system 60.

The main system 60 includes a main CPU (Central Processing Unit), a memory which is a main storage device, a memory controller, a GPU (Graphics Processing Unit), etc. The GPU is used mainly for computation processing of a game program. The main CPU has a function of starting an OS (Operating System) and executing a game program installed in the auxiliary storage device 2 under an environment provided by the OS. The sub-system 50 includes a sub-CPU, a memory which is a main storage device, a memory controller, etc., and does not include a GPU.

The main CPU has a function of executing a game program installed in the auxiliary storage device 2 or a ROM (Read Only Memory) medium 44 while the sub-CPU does not have such a function. The sub-CPU has, however, a function of accessing the auxiliary storage device 2 and a function of exchanging data with the management server 5. The sub-CPU has such limited process functions, and thus, is operable with power consumption smaller than that of the main CPU. These functions of the sub-CPU are executed when the main CPU is under a standby state.

The main power button 20 is disposed on a front surface of a casing of the game device 10, and is operated to turn on/off a power supply to the main system 60 of the game device 10. The power ON LED 21 is lit when the main power button 20 is on. The standby LED 22 is lit when the main power button 20 is off. The system controller 24 detects that the user depresses the main power button 20. The clock 26, which is a real time clock, generates current time information, and supplies the current time information to the system controller 24, the sub-system 50, and the main system 60.

The device controller 30 is formed as an LSI (Large-Scale Integrated Circuit) which is like a Southbridge to perform information exchange between devices. As depicted in the drawing, devices such as the system controller 24, the medium drive 32, the USB module 34, the flash memory 36, the wireless communication module 38, the wired communication module 40, the sub-system 50, and the main system 60 are connected to the device controller 30. The device controller 30 absorbs a difference in electric characteristics and data transfer speeds between the devices, and controls data transfer timings.

The medium drive 32 is a drive device that is driven when the ROM medium 44 having application software of a game or the like and license information recorded therein is attached thereto, and that reads out a program and data from the ROM medium 44. The ROM medium 44 is a read only recording medium such as an optical disk, a magneto-optical disk, or a Blu-ray disk.

The USB module 34 is a module that establishes connection to an external device via a USB cable. The USB module 34 may be connected with the auxiliary storage device 2 and the camera 7 via USB cables. The flash memory 36 is an auxiliary storage constituting an internal storage. The wireless communication module 38 wirelessly communicates with the game controller 6 in accordance with a communication protocol such as the Bluetooth (registered trademark) protocol or the IEEE (Institute of Electrical and Electronics Engineers) 802.11 protocol. The wired communication module 40 wiredly communicates with an external device to, for example, establish connection to the network 3 via the AP 8.

FIG. 3 is a top view of the game controller 6. FIG. 4 is a perspective view of the game controller 6. The game controller 6 has a casing 80 including a left grip portion 80a, a right grip portion 80b, and a casing body portion 80c. The left grip portion 80a and the right grip portion 80b are disposed on both sides of the casing body portion 80c. The left grip portion 80a is gripped by a user's left hand, and the right grip portion 80b is gripped by a user's right hand.

Various operation elements to be operated by the user are disposed on the casing body portion 80c. Direction keys 70, action buttons 71, a left analog stick 72a, a right analog stick 72b, a touch pad 73, a create button 74, an option button 75, a home button 76, a mute button 77, a speaker 78, and a microphone 79 are disposed on a top surface of the casing body portion 80c. An up key 70a, a right key 70b, a down key 70c, and a left key 70d constitute the direction keys 70. A Δ button 71a, a ∘ button 71b, a × button 71c, and a □ button 71d constitute the action buttons 71. The left analog stick 72a further functions as an L3 button that is turned on when depressed. Likewise, the right analog stick 72b further functions as an R3 button that is turned on when depressed. Also, the touch pad 73 further functions as a touch pad button that is turned on when depressed.

A USB terminal 81, an L1 button 82a, an R1 button 82b, an L2 button 83a, and an R2 button 83b are disposed on a rear surface of the casing body portion 80c. The L2 button 83a and the R2 button 83b are trigger type buttons. An actuator that dynamically changes resistance when a user finger depresses a trigger type button is connected to the L2 button 83a and the R2 button 83b.

FIG. 5 depicts another aspect of the information processing system 1 according to the embodiment. In this aspect, the user on the second floor of the user's house operates the terminal device 100 which is equipped with the display device and the speaker, thereby performing a remote play of a game installed in the game device 10. The terminal device 100 of the embodiment may be a device that does not have a game executing function and is dedicated to remote play. During a remote play, direct connection between the terminal device 100 and the game device 10 is established via the AP 8.

If the user operates the terminal device 100 during a remote play, the terminal device 100 transmits the user input data to the game device 10 in real time. The game device 10 reflects the user input data in the progress of the game, generates game image data and sound data, and stream-transmits the generated image data and sound data to the terminal device 100. The terminal device 100 displays the game image on the display device and outputs the game sound from the speaker, so that the user can play the game from a remote location away from the game device 10 and the output device 4.

FIG. 6 is a top view of the terminal device 100. The terminal device 100 has a casing 180 including a left grip portion 180a, a right grip portion 180b, and a casing body portion 180c. The left grip portion 180a and the right grip portion 180b are disposed on both sides of the casing body portion 180c. The left grip portion 180a is gripped by a user's left hand, and the right grip portion 180b is gripped by a user's right hand.

A touch panel 160, a first input section 163 that is disposed outside a left side of the touch panel 160, and a second input section 164 that is disposed outside a right side of the touch panel 160 are disposed on the casing body portion 180c. The touch panel 160 includes a display device 161 that has a rectangular display region, and a transparent touch pad 162 covering the rectangular display region. The display device 161 may be display means such as a liquid crystal panel or an organic EL (Electroluminescence) panel. During a remote play, a game image generated by the game device 10 is displayed in the display region of the display device 161. A display size (a length of a diagonal line of the display region) is at least 7 inches. Thus, it is difficult for the user to play a game while holding the terminal device 100 with one hand. The user plays a game while holding the terminal device 100 with both hands. The touch pad 162 is a multi-touch pad having a function of simultaneously detecting multiple touch points. The touch panel 160 is formed as a multi-touch screen.

The first input section 163 has at least one operation element. In this example, the first input section 163 has direction keys 170, a left analog stick 172a, a create button 174, and a home button 176. An up key 170a, a right key 170b, a down key 170c, and a left key 170d constitute the direction keys 170. The left analog stick 172a further functions as an L3 button that is turned on when depressed.

Likewise, the second input section 164 has at least one operation element. In this example, the second input section 164 has action buttons 171, a right analog stick 172b, an option button 175, and a mute button 177. A Δ button 171a, a ∘ button 171b, a × button 171c, and a □ button 171d constitute the action buttons 171. The right analog stick 172b further functions as an R3 button that is turned on when depressed.

A USB terminal, an L1 button 182a, an R1 button 182b, an L2 button, an R2 button, and a power button are disposed on a rear surface of the casing body portion 180c. When the power button is turned on, the terminal device 100 is started. The L2 button and the R2 button are trigger type buttons. An actuator that dynamically changes resistance when a user finger depresses a trigger type button is connected to the L2 button and the R2 button. A speaker and a microphone are disposed on a front surface of the casing body portion 180c. During a remote play, a game sound generated by the game device 10 is outputted from the speaker.

The terminal device 100 has all operation elements excluding the touch pad 73 among a plurality of the operation elements disposed on the game controller 6. The terminal device 100 of the embodiment emulates the function of the touch pad 73 of the game controller 6 on the display region of the touch panel 160, so that the user is allowed to execute game inputs the same as those when the user uses the game controller 6.

FIG. 7 depicts functional blocks of a controller of the terminal device 100. The terminal device 100 includes a remote application execution section 110, a reception section 112, an operation region setting section 114, a guide display section 116, an acquisition section 118, an output processing section 120, and a communication processing section 122. The communication processing section 122 establishes connection to the game device 10 in a communicable manner via the AP 8.

In the embodiment, the user on the second floor of the user's house performs remote play of a game. However, the user also can perform remote play of a game from a location away from the house. In such a case, the communication processing section 122 may establish P2P communication with the game device 10 over the network 3, or may establish communication with the management server 5 over the network 3.

The functions of components of the terminal device 100 depicted in FIG. 7 may be implemented in circuitry or processing circuitry including a general-purpose processor, an application specific processor, an integrated circuit, ASICs (Application Specific Integrated Circuits), a CPU (Central Processing Unit), a conventional circuit which are configured or programmed to implement the functions described herein, and/or a combination thereof. The processor is regarded as circuitry or processing circuitry including a transistor and any other circuits. The processor may be a programmed processor which executes a program stored in a memory.

In the present description, circuitry, a unit, and means are hardware programmed to execute the described functions, or hardware for executing the described functions. This hardware may be any hardware disclosed herein, or any hardware programmed to implement the described functions or known to execute the described functions.

In a case where the hardware is a processor regarded as a circuitry type, the circuitry, the means, or the unit may be a combination of hardware and software that is used to constitute the hardware and/or the processor.

The user depresses the power button to start the terminal device 100 and depresses the home button 176. Then, the remote application execution section 110 executes a remote application and the output processing section 120 displays a home screen on the touch panel 160.

FIG. 8 depicts an example of a home screen. When the user depresses the × button 171c, the remote application starts a connection process to the game device 10. In the connection process, the remote application causes the communication processing section 122 to transmit a connection request to the game device 10. In a case where the game device 10 is in a rest mode, the main system 60 of the game device 10 is started according to the connection request, so that communicable connection between the terminal device 100 and the game device 10 is established and an environment where a remote play can be performed is formed.

Incidentally, in a case where there are a plurality of connection destination candidates of a remote play, GUIs (Graphical User Interfaces) for selection from among the plurality of connection destinations are displayed. Then, the user selects a desired connection destination. Accordingly, connection between the terminal device 100 and the desired game device 10 is established.

FIG. 9 depicts functional blocks of the game device 10. The game device 10 includes a reception section 210, a log-in processing section 212, a system image generation section 214, a game execution section 216, a game image generation section 218, a game sound generation section 220, and a communication processing section 222. The communication processing section 222 exhibits the functions of the wireless communication module 38 and the wired communication module 40 depicted in FIG. 2, and exchanges data with the communication processing section 122.

The functions of components of the game device 10 depicted in FIG. 9 may be implemented in circuitry or processing circuitry including a general-purpose processor, an application specific processor, an integrated circuit, ASICs (Application Specific Integrated Circuits), a CPU (Central Processing Unit), a conventional circuit which are configured or programmed to implement the functions described herein, and/or a combination thereof. The processor is regarded as circuitry or processing circuitry including a transistor and any other circuits. The processor may be a programmed processor which executes a program stored in a memory.

In the present description, circuitry, a unit, and means are hardware programmed to execute the described functions, or hardware for executing the described functions. This hardware may be any hardware disclosed herein, or any hardware programmed to implement the described functions or known to execute the described functions.

In a case where the hardware is a processor regarded as a circuitry type, the circuitry, the means, or the unit may be a combination of hardware and software that is used to constitute the hardware and/or the processor.

When connection between the communication processing section 122 of the terminal device 100 and the communication processing section 222 of the game device 10 is established in a communicable manner, the remote application causes the communication processing section 122 to transmit a user log-in request to the game device 10. If a passcode for log-in to the game device 10 has been set, the passcode for log-in to the game device 10 is included in the log-in request. Incidentally, if a passcode for log-in to the game device 10 has not been set, no log-in passcode is included in the log-in request.

In the game device 10, the communication processing section 222 receives the user log-in request from the terminal device 100. When the reception section 210 receives the log-in request received at the communication processing section 222, the log-in processing section 212 confirms validity of the passcode included in the log-in request and permits the user to log in. After the user logs in to the game device 10, the system image generation section 214 generates home screen data for the user. The communication processing section 222 transmits the generated home screen data to the terminal device 100. It is to be noted that, in a case where the game device 10 is started before a remote play is started, screen data to be displayed on the output device 4 is transmitted to the terminal device 100. However, the embodiment is based on the assumption that the game device 10 is not started before a remote play is started.

In the terminal device 100, the communication processing section 122 receives the home screen data, and the acquisition section 118 acquires the home screen data from the communication processing section 122. The output processing section 120 displays the home screen on the touch panel 160 on the basis of the acquired home screen data.

FIG. 10 depicts an example of a home screen provided by the game device 10. When the user logs in to the game device 10, the output processing section 120 displays a home screen on the display device 161 of the touch panel 160. Hereinafter, the display device 161 having a display function may also be referred to as touch panel 160.

On the home screen provided by the game device 10, content icons of a game or an application installed in the auxiliary storage device 2 are arranged. When the home screen is displayed, the reception section 112 receives input data regarding a user operation performed on any one of the operation elements. Then, the communication processing section 122 transmits the input data to the game device 10. In the game device 10, the communication processing section 222 receives the input data, and then, the reception section 210 provides the input data to the system image generation section 214.

When the user operates a horizontal direction key (the right key 170b or the left key 170d) of the terminal device 100 for the home screen, the system image generation section 214 generates home screen data indicating that an icon train has been moved horizontally and the communication processing section 222 transmits the home screen data to the terminal device 100. The user puts a game icon 142 into a selection area 140 and operates a prescribed execution button (e.g., the × button 171c) of the terminal device 100. Then, the game execution section 216 starts a game having a game title of "Combat field." The game image generation section 218 generates a game starting screen. Then, the communication processing section 222 stream-transmits game image data to the terminal device 100. In the terminal device 100, the acquisition section 118 acquires the game image data, and the output processing section 120 displays the game image on the touch panel 160 on the basis of the game image data.

After the game is started, the user operates the operation elements on the terminal device 100 in order to move a game character within a game space. The reception section 112 receives input data regarding a user operation performed on the operation elements, and the communication processing section 122 transmits the input data to the game device 10 executing the game.

In the game device 10, when the communication processing section 222 receives the input data, the reception section 210 receives the input data from the communication processing section 222 and supplies the input data to the game execution section 216. The game execution section 216 executes the game based on the input data. On the basis of an execution result of the game, the game image generation section 218 generates game image data, and the game sound generation section 220 generates game sound data. The game image generation section 218 includes a GPU (Graphics Processing Unit) for executing rendering or the like such that, in response to a computation process result in a virtual space obtained by the game execution section 216, game image data based on a viewpoint position (virtual camera) in the virtual space is generated. The communication processing section 222 stream-transmits the game image data and the game sound data to the terminal device 100.

In the terminal device 100, the communication processing section 122 receives the game image data and the game sound data. The acquisition section 118 acquires the game image data and the game sound data from the communication processing section 122, and supplies the game image data and the game sound data to the output processing section 120. Then, the output processing section 120 displays the game image on the touch panel 160 and outputs the game sound from the speaker.

FIG. 11 depicts an example of a game image of a remote play being performed by the user. In this example, the user plays "Combat field" which is under execution at the game device 10, and the output processing section 120 displays, on the display device 161 of the touch panel 160, a game image transmitted from the game device 10.

As previously explained, the terminal device 100 has all physical operation elements excluding the touch pad 73 among a plurality of the operation elements disposed on the game controller 6. The terminal device 100 of the embodiment emulates the function of the touch pad 73 of the game controller 6 on the display region of the touch panel 160, so that the user is allowed to execute a game input using completely the same operation elements as those on the game controller 6.

The operation region setting section 114 sets, on the display region of the touch panel 160, an operation region where an input can be executed just as executed on the touch pad 73 of the game controller 6. Specifically, the operation region setting section 114 sets a first operation region 150a in a left part of the display region, and sets a second operation region 150b in a right part of the display region.

FIG. 12 depicts two operation regions that are set in the display region. The operation region setting section 114 sets the first operation region 150a and the second operation region 150b during a remote play. When a remote play is not being performed, the operation region setting section 114 does not set the first operation region 150a and the second operation region 150b. The first operation region 150a and the second operation region 150b are regions where the function of the touch pad 73 included in the game controller 6 of the game device 10 is emulated. The first operation region 150a is operated with a finger (mainly, left thumb) of the left hand and the second operation region 150b is operated with a finger (mainly, right thumb) of the right hand.

Since a display size of the display device 161 is at least 7 inches in the embodiment, it is difficult for the user to hold the terminal device 100 with one hand. The user naturally holds the two grip portions with both hands. In the embodiment, therefore, an operation function of one touch pad 73 of the game controller 6 is implemented in two emulation areas in the left and right parts of the touch panel 160 such that the user can operate the emulation areas (operation regions) with fingers of the left and right hands.

The operation region setting section 114 sets the left end of the first operation region 150a at the left end of the display region, and sets the right end of the second operation region 150b at the right end. Incidentally, the operation region setting section 114 may set the left end of the first operation region 150a slightly rightward from the left end of the display region and set the right end of the second operation region 150b slightly leftward from the right end of the display region. In such a case, it is preferable that a space between the left end of the first operation region 150a and the left end of the display region is smaller than a longitudinal width of the first operation region 150a and that a space between the right end of the second operation region 150b and the right end of the display region is smaller than a longitudinal width of the second operation region 150b. The operation region setting section 114 sets the right end of the first operation region 150a leftward from a center of the display region, and sets the left end of the second operation region 150b rightward from the center of the display region. It is preferable that the operation region setting section 114 sets the first operation region 150a and the second operation region 150b having the same shape to adjust operation ranges of the left hand and the right hand to be equal to each other. The operation region setting section 114 may form the shapes of the first operation region 150a and the second operation region 150b to be substantially matched with the shape of the operation region in the touch pad 73 of the game controller 6.

When the user operates (touches) the first operation region 150a and/or the second operation region 150b during a remote play, the reception section 112 receives input data regarding the user operation performed on the first operation region 150a and/or the second operation region 150b. Specifically, the reception section 112 receives, as input data, position coordinates of a touch of the left thumb in the first operation region 150a and/or the position coordinates of a touch of the right thumb in the second operation region 150b. The position coordinates are position coordinates in a two-dimensional coordinate defined in each operation region, and correspond to position coordinates in a two-dimensional coordinate defined on the touch pad 73.

The reception section 112 receives, as input data on one operation region, a user operation performed on the first operation region 150a and the second operation region 150b. That is, the same two-dimensional coordinate is defined in the first operation region 150a and the second operation region 150b. Therefore, the reception section 112 receives position coordinates in the common two-dimensional coordinate as the input data.

By way of example, when the left thumb touches the first operation region 150a and the right thumb touches the second operation region 150b simultaneously, the reception section 112 detects that two points are touched simultaneously in one operation region, and receives the position coordinates of the two points as the input data. The reception section 112 of the embodiment receives a user operation performed on the first operation region 150a and the second operation region 150b as input data to the touch pad 73 of the game controller 6. It is to be noted that, when a double tap operation is performed on the first operation region 150a and/or the second operation region 150b, the reception section 112 receives input data indicating that the touch pad 73 of the game controller 6 is depressed.

The communication processing section 122 transmits the input data regarding a user operation performed on the first operation region 150a and/or the second operation region 150b, to the game device 10. Accordingly, the user can execute a game input using the terminal device 100 with an operation sense substantially the same as in the game controller 6. In the game device 10, the game execution section 216 executes the game according to the input data regarding a user operation performed on the operation elements and/or the input data regarding a user operation performed on the first operation region 150a and/or the second operation region 150b.

The guide display section 116 displays a guide for informing the user about the position of the first operation region 150a and/or the position of the second operation region 150b. FIG. 13 depicts an example of a guide displayed on the touch panel 160. The guide display section 116 displays a first guide 152a and/or a second guide 152b according to the position of the first operation region 150a and/or the position of the second operation region 150b. The first guide 152a and the second guide 152b include at least respective outer frames indicating the range of the first operation region 150a and the range of the second operation region 150b. An effect for making the position of the operation region noticeable to the user may be provided in a region inside the frame. It is preferable that the region where an effect is provided is limited so as not to largely hide the game image included in the frame. Therefore, it is preferable that the effect is displayed only in the region inside the frame along the outer frame and the game image around a center in the frame is displayed without being hidden by the effect.

If a touch operation is performed at a certain point on the touch panel 160, the guide display section 116 displays the first guide 152a and/or the second guide 152b. Specifically, if a touch operation is performed at a point outside the first operation region 150a and the second operation region 150b on the touch panel 160, the guide display section 116 displays the first guide 152a and the second guide 152b. On the other hand, if a touch operation is performed in the first operation region 150a on the touch panel 160, the guide display section 116 displays the first guide 152a only and if a touch operation is performed in the second operation region 150b on the touch panel 160, the guide display section 116 displays the second guide 152b only.

It is to be noted that, since the first guide 152a and/or the second guide 152b is superimposed on the game image, it is preferable that the guide display section 116 stops display of the first guide 152a and/or second guide 152b if a user operation on the prescribed first operation region 150a and/or the second operation region 150b is not inputted for a prescribed time period. It is to be noted that even in a state where neither the first guide 152a nor the second guide 152b is displayed, the reception section 112 may receive the input data when a touch operation is performed on the first operation region 150a and/or the second operation region 150b.

The operation region setting section 114 may make vertical direction positions of the first operation region 150a and the second operation region 150b adjustable. FIG. 14 depicts an example of a setting screen for adjusting the vertical direction positions. By operating the up key 170a or the down key 170c, the user can move a focus frame 154 in a vertical direction on the setting screen. The operation region setting section 114 displays the first operation region 150a and the second operation region 150b at a height corresponding to the focus frame 154. By taking a size of the user's hands or the like into consideration, the user sets the vertical direction positions of the first operation region 150a and the second operation region 150b, and presses a prescribed button. Accordingly, the vertical direction positions of the first operation region 150a and the second operation region 150b are determined.

In the embodiment, the first operation region 150a and the second operation region 150b are arranged at the same height (vertical direction position). In another example, however, the first operation region 150a and the second operation region 150b may be set at different heights.

If a touch operation on the first operation region 150a and/or second operation region 150b is performed while a guide is displayed, the guide display section 116 may change a display style of the guide. When the display style of the guide is changed, the user can recognize that an operation is being performed on the operation region.

FIG. 15 depicts another example of a guide displayed on the touch panel 160. In FIG. 15, a second guide 152b corresponding to a touch operation performed on the second operation region 150b is depicted. When the second operation region 150b is not being operated, the guide display section 116 displays, as the second guide 152b, an outer frame of the second operation region 150b (see FIG. 13). When the user performs a touch operation on the second operation region 150b, the guide display section 116 changes the display style of the second guide 152b to inform the user that the second operation region 150b is being operated. It is to be noted that when a single tap operation is performed on the second operation region 150b, the guide display section 116 may change the display style of the second guide 152b.

By way of example, the guide display section 116 may highlight the inner part of the outer frame of the second operation region 150b to inform the user that the second operation region 150b is being operated. When the inner part of the outer frame is highlighted, the user can easily recognize that the second operation region 150b is successfully being operated. It is to be noted that the guide display section 116 may make the inner part of the outer frame translucent to inform the user that the second operation region 150b is being operated. In the embodiment, when the user is not operating the second operation region 150b, the game image is displayed in the inner part of the outer frame. Therefore, when the second operation region 150b is operated, the display style of the inner part of the outer frame is changed. Accordingly, the user can confirm that the second operation region 150b is being validly operated.

It is to be noted that, if a touch operation is performed on the second operation region 150b while no guide is displayed, the guide display section 116 may initially display the second guide 152b with the inner side of the outer frame of the second operation region 150b highlighted, in order to inform the user that the second operation region 150b is being operated.

FIG. 16 depicts still another example of a guide displayed on the touch panel 160. FIG. 16 depicts the second guide 152b corresponding to a double tap operation performed on the second operation region 150b. As previously explained, when a double tap on the first operation region 150a and/or the second operation region 150b is performed, the reception section 112 receives input data indicating that the touch pad 73 of the game controller 6 is depressed. Therefore, when a double tap operation is performed on the second operation region 150b, the guide display section 116 may display an outer frame thereof to look depressed to the depth direction of the touch panel 160. Since the outer frame is displayed to look depressed when a double tap operation is performed, the user can confirm that a double tap operation corresponding to a depression of the touch pad 73 has been validly performed.

It is to be noted that if a double tap operation on the second operation region 150b is performed, the guide display section 116 may inform the user that the second operation region 150b is under double tap operation by another method, while presenting the position of the double tap operation to the user. By way of example, the guide display section 116 may execute performance display indicating that a ring centered on the position of the double tap operation is extended like water ripples. With this performance display, the user can visually recognize the position of the double tap operation. Incidentally, the performance display using water ripples corresponding to the double tap operation may be executed instead of displaying depression of the outer frame to the depth direction of the touch panel 160, or may be executed when depression of the outer frame is displayed.

FIG. 17 depicts yet another example of a guide displayed on the touch panel 160. FIG. 17 depicts the second guide 152b corresponding to a swipe operation performed on the second operation region 150b. The swipe operation is a swipe of a user finger on the second operation region 150b. The guide display section 116 may display the movement path of the user touch position when the touch position in the second operation region 150b is moved. Since the movement path of the touch position is displayed when a swipe operation is performed, the user can confirm that the swipe operation on the second operation region 150b has been validly performed.

By way of example, the guide display section 116 performs brightness control in such a way that the brightness of the touch position on the second operation region 150b is increased to prescribed first brightness, and when the finger is moved from the touch position, the brightness of the touch position is gradually recovered to original second brightness. A time for recovering the second brightness from the first brightness may be approximately 1 to 2 seconds. The guide display section 116 performs this brightness control, thereby the movement path of the touch position can be displayed when the user performs a swipe operation on the second operation region 150b.

In connection with FIGS. 15 to 17, the explanations that the guide display section 116 changes the display style of the second guide 152b when the second operation region 150b is operated have been given, but the guide display section 116 may also change the display style of the first guide 152a when the first operation region 150a is operated.

The present disclosure has been explained so far on the basis of the embodiment. The embodiment exemplifies the present disclosure but a person skilled in the art will understand that various modifications can be made to a combination of the constituent elements or the process steps of the embodiment and that these modifications are also within the scope of the present disclosure. In a certain modification, the operation region setting section 114 may make the sizes of the first operation region 150a and the second operation region 150b adjustable.

The terminal device 100 of the embodiment is a device dedicated for remote play but may be used as a device for executing cloud gaming by establishing connection to a cloud gaming server. In a case where the terminal device 100 is used for a cloud gaming service, the operation region setting section 114 may set the first operation region 150a and the second operation region 150b during cloud gaming.

### [Industrial Applicability]

The present disclosure relates to a technique for allowing a user to play a game from a remote location away from a game device.

### [Reference Signs List]

1: Information processing system
6: Game controller
100: Terminal device
110: Remote application execution section
112: Reception section
114: Operation region setting section
116: Guide display section
118: Acquisition section
120: Output processing section
122: Communication processing section
150a: First operation region
150b: Second operation region
152a: First guide
152b: Second guide
154: Focus frame
160: Touch panel
161: Display device
162: Touch pad
163: First input section
164: Second input section
210: Reception section
212: Log-in processing section
214: System image generation section
216: Game execution section
218: Game image generation section
220: Game sound generation section
222: Communication processing section

## Claims

1. A terminal device that is operated by a user, the terminal device comprising:
a display device that has a rectangular display region;
a first input section that is disposed outside a left side of the display device and has at least one operation element;
a second input section that is disposed outside a right side of the display device and has at least one operation element; and
at least one processor that has hardware, wherein
the at least one processor
sets a first operation region in a left part of the display region and sets a second operation region in a right part of the display region,
receives input data regarding a user operation performed on the first operation region and/or the second operation region,
receives input data regarding a user operation performed on the operation elements,
transmits the input data to a game device executing a game,
receives game image data generated based on the input data by the game device, and
displays the game image on the display device.

2. The terminal device according to claim 1, wherein
the at least one processor receives a user operation performed on both the first operation region and the second operation region, as input data on one operation region.

3. The terminal device according to claim 2, wherein
the first operation region and the second operation region are regions where a function of a touch pad of a game controller of the game device is emulated, and
the at least one processor receives a user operation performed on the first operation region and the second operation region as input data to the touch pad of the game controller.

4. The terminal device according to claim 3, wherein
the at least one processor forms a shape of the first operation region and the second operation region to be substantially matched with a shape of an operation region in the touch pad of the game controller.

5. The terminal device according to claim 1, wherein
the at least one processor sets a left end of the first operation region at or near a left end of the display region, and sets a right end of the second operation region at or near a right end of the display region.

6. The terminal device according to claim 1, wherein
the at least one processor sets the first operation region and the second operation region having the same shape.

7. The terminal device according to claim 1, wherein
the at least one processor makes vertical direction positions of the first operation region and the second operation region adjustable.

8. The terminal device according to claim 1, wherein
the at least one processor displays a guide to inform the user about a position of the first operation region and/or a position of the second operation region.

9. The terminal device according to claim 8, wherein
the at least one processor receives input data when the first operation region and/or the second operation region is operated even in a state where the guide is not displayed.

10. The terminal device according to claim 8, wherein
the at least one processor
displays, as the guide, an outer frame of the first operation region and/or an outer frame of the second operation region, and
changes a display style of the guide when the first operation region and/or the second operation region is operated.

11. The terminal device according to claim 10, wherein
the at least one processor highlights an inner part of the outer frame when the first operation region and/or the second operation region is operated.

12. The terminal device according to claim 10, wherein
the at least one processor displays the outer frame to look depressed to a depth direction of the display device when a double tap operation is performed on the first operation region and/or the second operation region.

13. The terminal device according to claim 10, wherein
the at least one processor displays a movement path of a user touch position when the touch position is moved in the first operation region and/or the second operation region.

14. A game image display method in a terminal device including a display device that has a rectangular display region, and operation elements that are disposed outside left and right sides of the display device, the terminal device being connected with a game device in a communicable manner, the method comprising:
a step of setting a first operation region in a left part of the display region and setting a second operation region in a right part of the display region;
a step of receiving input data regarding a user operation performed on the first operation region and/or the second operation region;
a step of receiving input data regarding a user operation performed on the operation elements;
a step of transmitting the input data to the game device;
a step of receiving game image data generated based on the input data by the game device; and
a step of displaying the game image on the display device.

15. A program for causing a computer, the computer being installed in a terminal device including a display device that has a rectangular display region, and operation elements that are disposed outside left and right sides of the display device, the terminal device being connected with a game device in a communicable manner, to implement:
a function of setting a first operation region in a left part of the display region and setting a second operation region in a right part of the display region;
a function of receiving input data regarding a user operation performed on the first operation region and/or the second operation region;
a function of receiving input data regarding a user operation performed on the operation elements;
a function of transmitting the input data to the game device;
a function of receiving game image data generated based on the input data by the game device; and
a function of displaying the game image on the display device.
